# EUROPEAN PATENT SPECIFICATION

(11) **EP 3 606 127 B1**
(45) Date of publication and mention of the grant of the patent: **14.06.2023**
(21) Application number: 18774770.4
(22) Date of filing: 15.01.2018
(51) Int. Cl.: H04W 48/18, B61L 27/00, H04W 4/02

(54) **METHOD AND APPARATUS FOR COMMUNICATION-BASED TRAIN CONTROL**
VERFAHREN UND VORRICHTUNG ZUR KOMMUNIKATIONSBASIERTEN ZUGSTEUERUNG
PROCÉDÉ ET APPAREIL DE COMMANDE DE TRAIN BASÉE SUR UNE COMMUNICATION

(30) Priority: 30.03.2017 CN 201710202604
(43) Date of publication of application: 05.02.2020
(73) Proprietor: Siemens Mobility GmbH, 81739 München (DE)
(72) Inventor: WANG, Li, Beijing 100102 (CN); LAMPE, Mattias, Beijing 100102 (CN); XU, Zhong Liang, Beijing 100102 (CN)
(74) Representative: Isarpatent
(86) International application number: PCT/CN2018/072679
(87) International publication number: WO 2018/176994

(56) References cited:
- CN-A- 102 291 570
- CN-A- 102 781 108
- CN-A- 106 332 096
- CN-A- 106 535 209
- US-A1- 2014 101 522
- ZHAO, HAN: "Analysis of PIS Networking Scheme Based on LTE Technology", Urban Mass Transit, vol. 10, 1 January 2015 (2015-01-01), pages 120-123, XP055638771, ISSN: 1007-869X, DOI: 10.1637/j.1007-869x.2015.10.027

## Description

### Technical Field

The present invention relates to the field of train control, in particular to a Communication-Based Train Control (CBTC) method and a CBTC device.

### Background Art

With the rapid development of wireless communication technology, the reliability and availability of wireless communication has kept increasing, and CBTC systems have emerged, representing an important trend of train control technology development. A CBTC system controls and supervises a train by train-ground bidirectional data communication. Its outstanding advantages are a large information capacity and fast transmission, making it easy to implement a mobile automatic block system, and greatly reducing the number of cables to be laid and the routine maintenance workload.

In order to ensure reliable and safe control of a train, implementation of reliable and safe train-ground data communication has become one of the key points of CBTC systems. However, since wireless communication is open, wireless channels have complex characteristics and are susceptible to interference; such interference may seriously affect the train-ground data communication in a CBTC system. For example, when two or more trains travel on routes that are close to each other, their CBTC systems interfere with each other; in a serious case, communication is interrupted, and proper running of the trains may be affected. Therefore, how to reduce or avoid interference in CBTC systems has become a pressing problem.

CN 106 332 096 A describes such a CBTC system for a system of trains in which a current position of a first train is determined and a specific network is determined based on the current position. The system of trains is present and an LTE system as well as the wireless local area network are deployed in the specific area where the trains are present. CBTC communication is carried out by a specific network to control the trains.

### Summary of the Invention

The object of the present invention is to provide a CBTC method and a CBTC device that can reduce or avoid interference in CBTC systems . This object is solved by a CBTC method of claim 1 and a CBTC device of claim 5. Further advantageous embodiment and improvements of the present invention are listed in the dependent claims. Hereinafter, before coming to a detailed discussion of the embodiments of the present invention with reference to the attached claims, aspect of the invention which contribute to the understanding of the invention are listed below. However, it should be noted that the invention is defined by the attached claims and any examples and aspects which are not covered by these claims are also to be understood as aspects which simply contribute to the understanding of the invention.

In one aspect, an the present invention provides a CBTC method, comprising: determining a current position of a first train; and determining, based on said current position, a specific network to be used in a specific area, wherein a travel route of said first train and a travel route of at least one second train exist in said specific area, and a Long Term Evolution (LTE) network and a Wireless Local Area Network (WLAN) are deployed in said specific area, said specific network comprising at least one of the following: said LTE network or said WLAN; in said specific area, CBTC communication is carried out by said specific network to control said first train.

In another aspect, in said specific area, a travel route of said first train and a travel route of said at least one second train are at a distance from each other so that interference is caused between the CBTC communication used for said first train and the CBTC communication used for said at least one second train.

In another aspect, said method is implemented by a CBTC train-mounted communication gateway in said first train;
said step of determining a current position of a first train comprises: obtaining said current position from said first train.

In another aspect, said method is implemented by a CBTC trackside communication gateway beside a travel route of said first train;
said step of determining a current position of a first train comprises: receiving position information from a CBTC train-mounted communication gateway in said first train, said position information indicating said current position, said current position being obtained by said CBTC train-mounted communication gateway from said first train.

In another aspect, said step of determining said specific network based on said current position comprises:
based on said current position, finding, from prestored correspondence information, said specific network that corresponds to said current position, wherein said correspondence information is configured to indicate a correspondence relationship between a position of said first train and a network to be used in said specific area.

In another aspect, an aspect of the present invention provides a CBTC device, comprising:
a determination module, configured to determine a current position of a first train and determine, based on said current position, a specific network to be used in a specific area, wherein a travel route of said first train and a travel route of at least one second train exist in said specific area, and an LTE network and a WLAN are deployed in said specific area, said specific network comprising at least one of the following: said LTE network or said WLAN; and
a communication module, configured to, in said specific area, carry out CBTC communication by said specific network to control said first train.

In a further aspect, in said specific area at which said determination module is aimed, a travel route of said first train and a travel route of said at least one second train are at a distance from each other so that interference is caused between the CBTC communication used for said first train and the CBTC communication used for said at least one second train.

In another aspect, said device is a CBTC train-mounted communication gateway in said first train;
said determination module, when determining said current position, is specifically configured to obtain said current position from said first train.

In another aspect, said device is a CBTC trackside communication gateway beside a travel route of said first train;
said determination module, when determining said current position, is specifically configured to receive position information from a CBTC train-mounted communication gateway in said first train, said position information indicating said current position, said current position being obtained by said CBTC train-mounted communication gateway from said first train.

In another aspect, said determination module, when determining said specific network, is specifically configured to,
based on said current position, find, from prestored correspondence information, said specific network that corresponds to said current position, wherein said correspondence information is configured to indicate a correspondence relationship between a position of said first train and a network to be used in said specific area.

In another aspect, the present invention provides a CBTC device, comprising: at least one processor, and a memory coupled to said at least one processor. Said memory stores an executable instruction; said executable instruction, when executed by said processor, causes said processor to execute the steps of the above-described method.

In another aspect, the present invention provides a computer-readable medium that comprises code for causing a computer to implement the above-described method.

It is thus clear that in the present invention, an LTE and a WLAN are deployed in a specific area where a plurality of travel routes exist, and at least one of the two types of networks is selected on the basis of train positions to carry out CBTC communication; compared with a case in which only one type of wireless technology may be used for a plurality of travel routes in said specific area, an embodiment of the present invention can reduce or avoid interference in CBTC communication, thereby controlling trains reliably and safely.

### Brief Description of the Drawings

The above-described characteristics, technical features, advantages, and implementation mode of the present invention will be further explained below in an easy-to-understand manner based on a description of preferred embodiments and with reference to the drawings, wherein
Figures 1A to 1B are schematic drawings for examples of scenarios in which an embodiment of the present invention is applicable;
Figure 2 is a schematic diagram for an example of the deployment of a CBTC system according to an embodiment of the present invention;
Figure 3 is a flowchart for a CBTC method according to an embodiment of the present invention;
Figure 4 is a block diagram for a CBTC device according to an embodiment of the present invention; and
Figure 5 is a block diagram for a CBTC device according to another embodiment of the present invention.

### List of reference numerals used in the drawings:

| | | | |
|---|---|---|---|
| 110A: | Specific area | 110B: | Specific area |
| 201: | Train | 202: | Travel route |
| 203: | CBTC trackside subsystem | 204A: | Base station |
| 204B: | Base station | 205A: | AP |
| 205B: | AP | 205C: | AP |
| 206: | CBTC communication backbone network | 207: | CBTC trackside communication gateway |
| 208: | CBTC train-mounted subsystem | 209: | LTE client device |
| 210: | WLAN client device | 211: | CBTC train-mounted communication gateway |
| 310: | Determine a current position of a first train. | 320: | Determine a specific network. |
| 330: | Carry out CBTC communication by a specific network. | | |
| 400: | Device | 410: | Determination module |
| 420: | Communication module | 510: | Processor |
| 520: | Memory | | |

### Specific Embodiments

A CBTC system is a train control system based on train-ground bidirectional and large-capacity wireless communication, capable of achieving mobile blocking. Currently, CBTC systems are mainly based on WLANs and have an operating frequency of 2.4 GHz. Since effective coverage distances of WLANs are relatively short, in order to provide continuous and complete signal coverage, a large number of hotspots need to be deployed densely along a travel route of a train; however, such hotspots may lead to co-channel interference. Moreover, as more and more other devices have also started using this frequency for communication, interference is caused to a certain extent in WLAN-based CBTC systems.

In recent years, LTE-based CBTC systems have become a new hot topic of research. LTE is significantly superior to WLAN in anti-interference performance and mobility, allowing more reliable and stable train control. Therefore, LTE-based CBTC systems are setting the prevailing trend for development.

Though having significant advantages over WLAN-based CBTC systems, LTE-based CBTC systems also have certain limitations. For example, in an LTE network, only 20 MHz of bandwidth is allocated to a train travel route, and the bandwidth is in the range of 1785 MHz to 1805 MHz, wherein 5 MHz of bandwidth is shared by a passenger data system and a CBTC system and the other 5 MHz of bandwidth is specially used for a CBTC system. Such frequency allocation is sufficient for a single train travel route. However, if at least two train travel routes need to share the bandwidth, due to bandwidth insufficiency, CBTC systems used for these train travel routes may communicate with each other by using the same frequency. Consequently, communication interference is produced between these CBTC systems, and proper running of the trains is affected. For example, when the travel routes of a plurality of trains are close to each other, the above-described problem may occur.

In order to solve the above-mentioned problems, an embodiment of the present invention provides an improved technical solution for CBTC. Generally, for a specific area in which CBTC communication interference may exist, for example, for a specific area in which travel routes of at least two trains may exist, an LTE network and a WLAN may be deployed in the specific area. A specific network to be used in the specific area may be determined on the basis of train positions; for example, a specific network may comprise at least one type of network from an LTE network and a WLAN. Then, in the specific area, a train may be controlled by the determined specific network.

It is thus clear that, in an embodiment of the present invention, an LTE and a WLAN are deployed in a specific area where a plurality of travel routes exist, and at least one of the two types of networks is selected on the basis of train positions to control a train; compared with a case in which only one type of wireless technology may be used for a plurality of travel routes in said specific area, an embodiment of the present invention can reduce or avoid interference in CBTC communication, thereby controlling trains reliably and safely.

Embodiments of the present invention will be described below in detail with reference to the drawings.

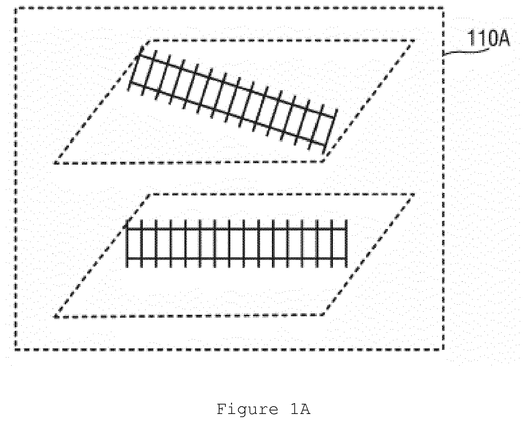

Figures 1A to 1C are schematic drawings for examples of scenarios in which an embodiment of the present invention is applicable. It should be understood that the examples shown in Figures 1A to 1C are only intended to help those of ordinary skill in the art to better understand embodiments of the present invention, instead of limiting the scope of embodiments of the present invention.

As described above, in a specific area, possibly at least two train travel routes exist, and these travel routes may be close to each other. Thus, if the CBTC systems used for these trains carry out CBTC communication with each other in said specific area by using the same type of wireless technology, then communication interference may be produced between these systems. For example, if these CBTC systems communicate with each other in said specific area by using the LTE technology, then due to a sufficiency of LTE bandwidth resources, they may communicate with each other by using the same frequency; consequently, interference is produced between them, possibly affecting train control.

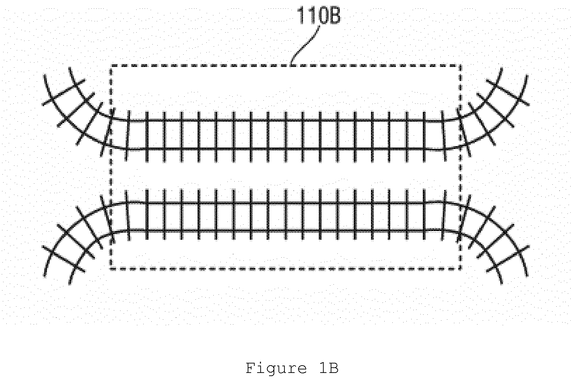

For example, Figures 1A to 1B show examples of two different scenarios. In the area 110A shown in Figure 1A, the two train travel routes may be at different horizontal layers but are close to each other in a height direction. For example, at the commuter station of two subway lines, a first subway line may be at a first-height layer, and a second subway line may be at a second-height layer. In the area 110B shown in Figure 1B, the two train travel routes may be at the same horizontal layer and close to each other. In the areas 110A to 110B, the above-described CBTC communication interference may be produced.

It should be noted that for brevity of description, in Figures 1A to 1B, explanations are given by taking two travel routes as examples, but embodiments of the present invention are not limited to such scenarios. In an embodiment of the present invention, more travel routes may exist in a specific area.

In such a specific area, CBTC communication interference may make it impossible to control a train reliably. In order to solve this problem, an embodiment of the present invention provides an effective solution. The technical solution provided by an embodiment of the present invention will be described below in detail with reference to specific embodiments.

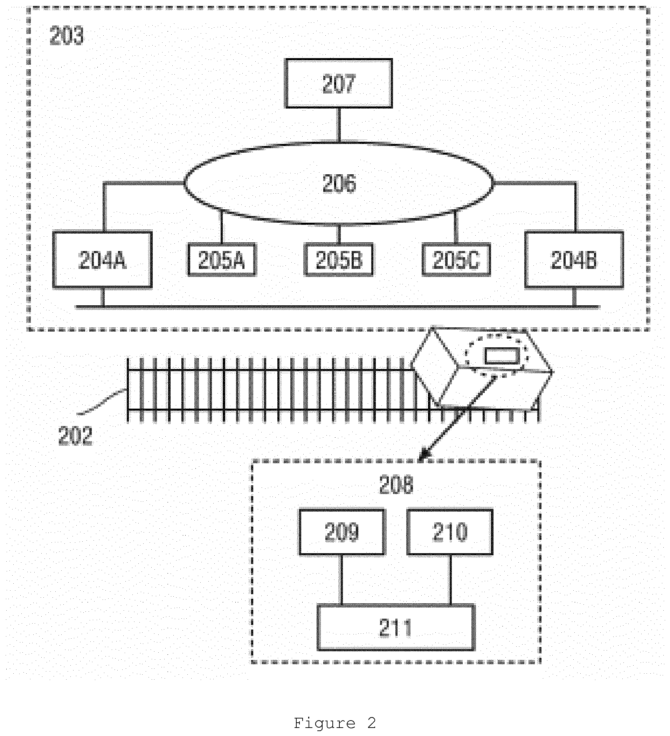

Figure 2 shows a schematic diagram for an example of the deployment of a CBTC system according to an embodiment of the present invention. The example shown in Figure 2 illustrates a travel route 202 followed by a train 201 in a specific area. In Figure 2, assume that the travel route 202 is close to a travel route of at least another train. For brevity of description, at least another train is not shown in Figure 2.

In the specific area, if the CBTC system of the train 201 and that of at least another train transfer CBTC signals by using the same wireless technology (especially by using the same frequency), then interference may be produced between their CBTC systems . For example, if the CBTC system of the train 201 and that of at least another train transfer CBTC signals by using the LTE technology, then due to a sufficiency of LTE bandwidth resources, these CBTC systems, to a great extent, may use the same frequency, and consequently interference may be produced between these CBTC systems. Therefore, two types of networks, an LTE network and a WLAN, may be deployed in the specific area, so that after the train 201 enters the specific area, the CBTC system of the train 201 may, based on a position of the train 201, carry out CBTC communication by selecting accordingly at least one type of these two types of networks. Thus, compared with a case in which a plurality of CBTC systems can carry out CBTC communication by using only the same wireless technology (especially at the same frequency) in the area, interference may be reduced or avoided.

A CBTC system may comprise a CBTC trackside subsystem and a CBTC train-mounted subsystem. A CBTC trackside subsystem may be deployed beside a train travel route, and a CBTC train-mounted subsystem may be deployed in a train. A CBTC trackside subsystem and a CBTC train-mounted subsystem may exchange CBTC signals, thereby controlling a train.

As shown in Figure 2, a CBTC trackside subsystem 203 used for the train 201 may be deployed on a side of a travel route 209. In the CBTC trackside subsystem 203, the base stations 204A and 204B, Access Points (APs) 205A, 205B, and 205C, and a CBTC trackside communication gateway 207 may each be connected to a CBTC communication backbone network 206.

Thus, the CBTC trackside communication gateway 207 may, by the CBTC communication backbone network 206, communicate with the base stations 204A and 204B as well as the APs 205A, 205B, and 205C, respectively.

Here, the base stations 204A and 204B may be an evolved NodeB (eNodeB or eNB), for providing LTE services. For example, the base stations 204A and 204B may provide LTE services by a leaky coaxial cable or an antenna. The APs 205A, 205B, and 205C may be WLAN APs, for providing WLAN services. For example, the APs 205A, 205B, and 205C may also provide WLAN services by an antenna or a leaky coaxial cable .

In addition, a CBTC train-mounted subsystem 208, for the train (201) may be deployed in the train 201. The CBTC train-mounted subsystem 208 may comprise one or more LTE client devices 209, one or more WLAN client devices 210, and a CBTC train-mounted communication gateway 211, wherein the LTE client device 209 and the WLAN client device 210 may be connected to the CBTC train-mounted communication gateway 211.

The CBTC trackside subsystem 203 may, by the LTE network and the CBTC train-mounted subsystem 208, control the train 201. For example, the CBTC trackside communication gateway 207 may, by the CBTC communication backbone network 206, send a CBTC signal to at least one of the base stations 204A and 204B. The base station 204A or 204B may, by the LTE network, send a CBTC signal received from the CBTC trackside communication gateway 207 to the LTE client device 209; then, the LTE client device 209 may send the received CBTC signal to the CBTC train-mounted communication gateway 211, for further processing.

In addition, the CBTC trackside subsystem 203 may also, by the WLAN and the CBTC train-mounted subsystem 208, control the train 201. For example, the CBTC trackside communication gateway 207 may, by the CBTC communication backbone network 206, send a CBTC signal to at least one of the APs 205A, 205B, and 205C. The AP 205A, 205B, or 205C may, by the WLAN, send a CBTC signal received from the CBTC trackside communication gateway 207 to the WLAN client device 210; then, the WLAN client device 210 may send the received CBTC signal to the CBTC train-mounted communication gateway 211, for further processing.

Likewise, the CBTC train-mounted subsystem 208 may, by the LTE network or WLAN, communicate with the CBTC trackside subsystem 203. The specific process is contrary to the above-described process. For brevity, no detailed description will be given herein.

It should be understood that, for convenience of description, specific numbers of certain communication devices are indicated in the deployment scenario shown in Figure 2; for example, two base stations, three APs, one LTE client device, and one WLAN client device are shown; however, embodiments of the present invention are not limited to such numbers. An embodiment of the present invention may be expanded to deployment scenarios with other numbers of communication devices.

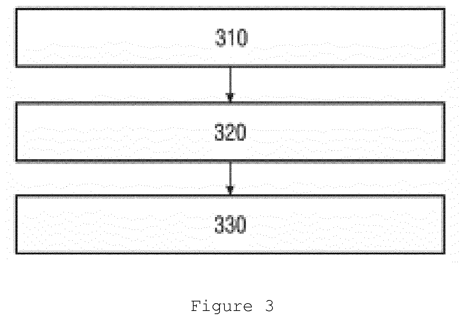

Figure 3 is a flowchart for a CBTC method according to an embodiment of the present invention. For example, the method shown in Figure 3 may be executed by the CBTC trackside communication gateway 207 or the CBTC train-mounted communication gateway 211 shown in Figure 2.

As shown in Figure 3, in step 310, a current position of a first train, for example, the train 201 shown in Figure 2, is determined.

In step 320, based on a current position of a first train, a specific network to be used in a specific area is determined,
wherein a travel route of the first train and a travel route of at least one second train exist in the specific area. In addition, an LTE network and a WLAN may be deployed in the specific area. Said specific network may comprise at least one type of network from an LTE network and a WLAN.

In step 330, in the specific area, a first train may be controlled by carrying out CBTC communication by said specific network.

It is thus clear that, in an embodiment of the present invention, an LTE and a WLAN are deployed in a specific area where a plurality of travel routes exist, and at least one of the two types of networks is selected on the basis of train positions to carry out CBTC communication; compared with a case in which only one type of wireless technology may be used for a plurality of travel routes in said specific area to carry out CBTC communication, an embodiment of the present invention can reduce or avoid interference in CBTC communication, thereby controlling trains reliably and safely.

In an embodiment, in said specific area, a travel route of a first train and a travel route of at least one second train are at a distance from each other so that interference is caused between the CBTC communication used for said at least one second train and the CBTC communication used for said first train. For example, in the scenarios shown in Figures 1A to 1B, since the two travel routes are close to each other, interference may be produced in the CBTC communication used for the two travel routes.

In another embodiment, the method shown in Figure 3 may be implemented by a CBTC train-mounted communication gateway in a first train. Thus, in step 310, a CBTC train-mounted communication gateway may obtain from a first train its current position. For example, in the deployment scenario shown in Figure 2, the CBTC train-mounted communication gateway 211 may receive from the train 201 its current position. For a specific method by which the train 201 determines its current position, any method applicable in the prior art may be adopted.

In another embodiment, the method shown in Figure 3 may be implemented by a CBTC trackside communication gateway (for example, the CBTC trackside communication gateway 207 shown in Figure 2) that is located beside a travel route of a first train. Thus, in step 310, a CBTC trackside communication gateway may receive position information from a CBTC train-mounted communication gateway in the first train, said position information indicating a current position of the first train. The current position may be obtained from a first train by a CBTC train-mounted communication gateway.

For example, in the exemplary deployment scenario shown in Figure 2, the CBTC train-mounted communication gateway 211 may obtain from the train 201 its current position. The CBTC train-mounted communication gateway 211 may, by the LTE network, the LTE client device 209, and the base station 204A or 204B, send the position information about the current position to the CBTC trackside communication gateway 207. Alternatively, the CBTC train-mounted communication gateway 211 may, by the WLAN, the WLAN client device 210, and the AP 205A, 205B, or 205C, send the position information about the current position to the CBTC trackside communication gateway 207.

Thus, a CBTC train-mounted communication gateway and a CBTC trackside communication gateway may, based on a position of a first train, select a specific network to be used in a specific area; thus, proper communication is guaranteed between a CBTC train-mounted subsystem and a CBTC trackside subsystem to ensure reliable control of trains.

In another embodiment, in step 320, based on a current position of a first train, from prestored correspondence information, a specific network that corresponds to the current position is found, wherein the correspondence information may be configured to indicate a correspondence relationship between a position of the first train and a network to be used in the specific area. For example, correspondence information may be in the form of a table, and may be prestored in a CBTC train-mounted communication gateway and a CBTC trackside communication gateway. Thus, the CBTC train-mounted communication gateway and the CBTC trackside communication gateway, after obtaining a current position of a first train, may quickly determine a specific network to be used in a specific area, thereby controlling a train reliably in real time.

Correspondence information may be preconfigured on the basis of various factors, for example, intensity of interference in a specific area, delay in switchover between networks, actual engineering condition of a travel route in a specific area, etc. For example, correspondence information may be preconfigured on the following conditions: if a current position of a first train is at a distance smaller than a first preset threshold from a travel route of at least one second train, then said specific network may be a WLAN and an LTE network; if a current position of a first train is at a distance smaller than a second preset threshold from at least one second train, then said specific network may be a WLAN; or if a current position of a first train is at a distance greater than or equal to a first preset threshold from a travel route of at least one second train, then said specific network may be an LTE network, wherein the first preset threshold may be greater than the second preset threshold.

It is thus clear that, in the above-described embodiments, an LTE network and a WLAN are deployed in a specific area where a plurality of travel routes exist; in addition, based on a train position, a specific network to be used in the specific area is selected from these two types of networks. Thus, compared with a case in which only one type of wireless technology may be used for a plurality of travel routes in said specific area to carry out CBTC communication, an embodiment of the present invention can reduce or avoid interference in CBTC communication, thereby controlling trains reliably.

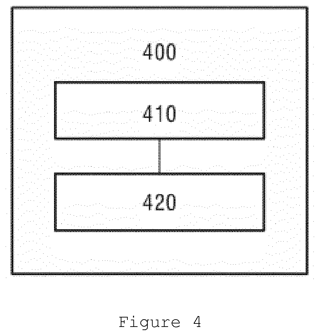

Figure 4 is a block diagram for a CBTC device according to an embodiment of the present invention. The device 400 shown in Figure 4 may be implemented by software, hardware, for example, an integrated circuit, a Digital Signal Processor (DSP), etc. or a combination of software and hardware.

As shown in Figure 4, the device 400 may comprise a determination 410 and a communication module 420.

The determination module 410 may determine a current position of a first train; the determination module 410 may also determine, based on a current position, a specific network to be used in a specific area, wherein a travel route of a first train and a travel route of at least one second train exist in the specific area, and an LTE network and a WLAN are deployed in the specific area. Accordingly, the specific network may comprise at least one of an LTE network and a WLAN.

The communication module 420 may control a first train by carrying out CBTC communication by a specific network in a specific area. It is thus clear that, in an embodiment of the present invention, an LTE and a WLAN are deployed in a specific area where a plurality of travel routes exist, and at least one of the two types of networks is selected on the basis of train positions to carry out CBTC communication; compared with a case in which only one type of wireless technology may be used for a plurality of travel routes in said specific area to carry out CBTC communication, an embodiment of the present invention can reduce or avoid interference in CBTC communication, thereby controlling trains reliably and safely.

In an embodiment, in a specific area at which the determination module 410 is aimed, a travel route of a first train and a travel route of at least one second train are at a distance from each other so that interference is caused between the CBTC communication used for the first train and the CBTC communication used for said at least one second train.

In another embodiment, the device 400 may be a CBTC train-mounted communication gateway in a first train; then, the determination module 410, when determining a current position of a first train, may be specifically configured to obtain from a first train its current position.

In another embodiment, the device 400 may be a CBTC trackside communication gateway beside a travel route of said first train. Then, the determination module 410, when determining a current position of a first train, may be specifically configured to receive position information from a CBTC train-mounted communication gateway in a first train; the position information is configured to indicate a current position of the first train, and the current position may be obtained from a first train by a CBTC train-mounted communication gateway.

In another embodiment, the determination module 410, when determining a specific network, may be specifically configured to, based on a current position of a first train, from prestored correspondence information, find a specific network that corresponds to the current position, wherein the correspondence information may be configured to indicate a correspondence relationship between a position of the first train and a network to be used in the specific area.

For other functions and operations of the device 400, see the flow of a method embodiment shown in Figures 2 and 3. To avoid repetitions, no similar descriptions will be provided again.

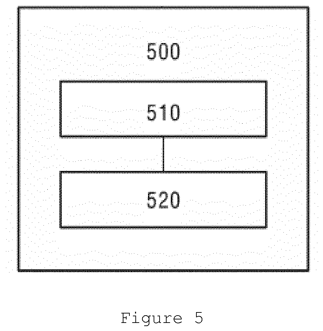

Figure 5 is a block diagram for a CBTC device according to another embodiment of the present invention. As shown in Figure 5, the device 500 may comprise at least one processor 510 and a memory 520; the memory 520 may store an executable instruction; said executable instruction, when executed by the processor 510, may cause the processor 510 to execute the flow shown in Figures 2 and 3.

An embodiment of the present invention further provides a computer-readable medium. The computer-readable medium may comprise code that causes a computer to execute the flow shown in Figures 2 and 3. Computer-readable mediums may include non-temporary computer-readable mediums; for example, they may include, but are not limited to, USB drives, movable hard disks, Read-Only Memories (ROMs), Random Access Memories (RAMs), magnetic disks, CD-ROMs, or any medium that can store program code.

While the present invention has been described and illustrated in detail above with reference to the drawings and preferred embodiments, the present invention is not limited to these disclosed embodiments with the protection scope being defined according to Art. 69 of the EPC protocol.

## Claims

1. A communication-based train control, CBTC, method, comprising:
a1) determining (310) a current position of a first train (201);
a2) wherein the first train (201) has a travel route and a second train has a travel route;
a3) determining if train positions on the travel routes are in a specific area (110A, 110B), in which the distance of the first train to the second train from each other is such that interference is caused when the first train (201) and the second train use the same wireless communication technology and frequency for CBTC communication, and in which two types of networks, an Long Term Evolution, LTE, network and a Wireless Local Area Network, WLAN, are deployed;
b) determining (320) a specific network to be used in the specific area (110A, 110B), wherein said specific network is selected from the Long Term Evolution, LTE, network and the Wireless Local Area Network, WLAN, deployed in said specific area (110A, 110B), based on a distance of the current position of the first train to the second train; and
c) in said specific area (110A, 110B), initiating (330) communication over the selected network for transmitting information for a CBTC communication to control said first train (201) .

2. The method as claimed in claim 1, **characterized in that** said step of determining a current position of said first train (201) comprises: obtaining said current position from said first train (201).

3. The method as claimed in claim 1, **characterized in that** said step of determining a current position of said first train (201) comprises:
receiving position information from a CBTC train-mounted communication gateway (208) in said first train (201), said position information indicating said current position, said current position being obtained by said CBTC train-mounted communication gateway (208) from said first train (201) .

4. The method as claimed in claim 1, **characterized in that** said step of determining said specific network comprises:
based on said current position, finding, from prestored correspondence information, said specific network that corresponds to said current position, wherein said correspondence information is configured to indicate a correspondence relationship between a position of the first train (201) and a network to be used in the specific area (110A, 110B).

5. A communication-based train control, CBTC, device, comprising a determination module (410) and a communication module (420), wherein the determination module (410) is configured to:
a1) determine (310) a current position of a first train (201);
a2) wherein the first train (201) has a travel route and a second train has a travel route;
a3) determine if train positions on the travel routes are in a specific area (110A, 110B), in which the distance of the first train to the second train from each other is such that interference is caused when the first train (201) and the second train use the same wireless communication technology and frequency for CBTC communication, and in which two types of networks, an Long Term Evolution, LTE, network and a Wireless Local Area Network, WLAN, are deployed;
b) determine a specific network to be used in the specific area (110A, 110B), wherein said specific network is selected from the Long Term Evolution, LTE, network and the Wireless Local Area Network, WLAN, deployed in said specific area (110A, 110B), based on a distance of the current position of the first train to the second train; and
wherein said communication module (400) is configured to:
c) initiate, in said specific area (110A, 110B), communication over the selected network for transmitting information for a CBTC communication to control said first train (201).

6. The device as claimed in claim 5, **characterized in that** said device is a CBTC train-mounted communication gateway (208) in said first train (201);
said determination module (410), when determining said current position, is specifically configured to: obtain said current position from said first train (201).

7. The device as claimed in claim 5, **characterized in that** said device is a CBTC trackside communication gateway (203) beside a travel route of said first train; and
said determination module (410), when determining said current position, is specifically configured to:
receive position information from a CBTC train-mounted communication gateway (208) in said first train (201), said position information indicating said current position, said current position being obtained by said CBTC train-mounted communication gateway (208) from said first train (201) .

8. The device as claimed in claim 5, **characterized in that** said determination module (410), when determining said specific network, is specifically configured to:
based on said current position, find, from prestored correspondence information, said specific network that corresponds to said current position, wherein said correspondence information is configured to indicate a correspondence relationship between a position of the first train (201) and a network to be used in the specific area (110A, 110B) .

9. A computer-readable medium, comprising code for causing a computer to execute the method as claimed in any one of claims 1 to 4.

## Patentansprüche

1. Kommunikationsbasiertes Zugsteuerungs-, CBTC-, Verfahren, das Folgendes umfasst:
a1) Bestimmen (310) einer aktuellen Position eines ersten Zuges (201) ;
a2) wobei der erste Zug (201) eine Fahrtroute hat und ein zweiter Zug eine Fahrtroute hat;
a3) Bestimmen, ob die Zugpositionen auf den Fahrtrouten in einem bestimmten Bereich (110A, 110B) liegen, in dem der Abstand zwischen dem ersten und dem zweiten Zug so ist, dass es zu Störungen kommt, wenn der erste Zug (201) und der zweite Zug dieselbe Drahtloskommunikationstechnologie und -frequenz für die CBTC-Kommunikation verwenden, und in dem zwei Arten von Netzwerken, ein Long Term Evolution, LTE-, Netzwerk und ein drahtloses lokales Netzwerk, WLAN, eingesetzt werden;
b) Bestimmen (320) eines spezifischen Netzwerks, das in dem spezifischen Bereich (110A, 110B) zu verwenden ist, wobei das spezifische Netzwerk aus dem Long Term Evolution-, LTE-, Netzwerk und dem drahtlosen lokalen Netzwerk, WLAN, ausgewählt wird, die in dem spezifischen Bereich (110A, 110B) eingesetzt werden, basierend auf einem Abstand der aktuellen Position des ersten Zuges zu dem zweiten Zug; und
c) in dem spezifischen Bereich (110A, 110B), Initiieren (330) einer Kommunikation über das ausgewählte Netzwerk zum Übertragen von Informationen für eine CBTC-Kommunikation, um den ersten Zug (201) zu steuern.

2. Verfahren nach Anspruch 1, **dadurch gekennzeichnet, dass** der Schritt des Bestimmens einer aktuellen Position des ersten Zuges (201) umfasst:
Erhalten der aktuellen Position von dem ersten Zug (201).

3. Verfahren nach Anspruch 1, **dadurch gekennzeichnet, dass** der Schritt des Bestimmens einer aktuellen Position des ersten Zuges (201) umfasst:
Empfangen von Positionsinformationen von einem CBTC-zugmontierten Kommunikationsgateway (208) in dem ersten Zug (201), wobei die Positionsinformationen die aktuelle Position angeben, wobei die aktuelle Position von dem CBTC-zugmontierten Kommunikationsgateway (208) von dem ersten Zug (201) erhalten wird.

4. Verfahren nach Anspruch 1, **dadurch gekennzeichnet, dass** der Schritt des Bestimmens des spezifischen Netzwerks umfasst: basierend auf der aktuellen Position, Auffinden des spezifischen Netzwerks, das der aktuellen Position entspricht, aus vorgespeicherten Korrespondenzinformationen, wobei die Korrespondenzinformationen dazu ausgelegt sind, eine Korrespondenzbeziehung zwischen einer Position des ersten Zuges (201) und einem Netzwerk, das in dem spezifischen Bereich (110A, 110B) zu verwenden ist, anzugeben.

5. Kommunikationsbasierte Zugsteuerungs-, CBTC-, Vorrichtung, umfassend ein Bestimmungsmodul (410) und ein Kommunikationsmodul (420),
wobei das Bestimmungsmodul (410) dazu ausgelegt ist:
a1) eine aktuelle Position eines ersten Zuges (201) zu bestimmen (310) ;
a2) wobei der erste Zug (201) eine Fahrtroute hat und ein zweiter Zug eine Fahrtroute hat;
a3) zu bestimmen, ob die Zugpositionen auf den Fahrtrouten in einem bestimmten Bereich (110A, 110B) liegen, in dem der Abstand zwischen dem ersten und dem zweiten Zug so ist, dass es zu Störungen kommt, wenn der erste Zug (201) und der zweite Zug dieselbe Drahtloskommunikationstechnologie und -frequenz für die CBTC-Kommunikation verwenden, und in dem zwei Arten von Netzwerken, ein Long Term Evolution, LTE-, Netzwerk und ein drahtloses lokales Netzwerk, WLAN, eingesetzt werden;
b) eine spezifisches Netzwerk zu bestimmen, das in dem spezifischen Bereich (110A, 110B) zu verwenden ist, wobei das spezifische Netzwerk aus dem Long Term Evolution-, LTE-, Netzwerk und dem drahtlosen lokalen Netzwerk, WLAN, ausgewählt wird, die in dem spezifischen Bereich (110A, 110B) eingesetzt werden, basierend auf einem Abstand der aktuellen Position des ersten Zuges zu dem zweiten Zug; und
wobei das Kommunikationsmodul (400) dazu ausgelegt ist:
c) in dem spezifischen Bereich (110A, 110B), einer Kommunikation über das ausgewählte Netzwerk zum Übertragen von Informationen für eine CBTC-Kommunikation zu initiieren, um den ersten Zug (201) zu steuern.

6. Vorrichtung nach Anspruch 5, **dadurch gekennzeichnet, dass** die Vorrichtung ein CBTC-zugmontiertes Kommunikationsgateway (208) in dem ersten Zug (201) ist;
das Bestimmungsmodul (410) beim Bestimmen der aktuellen Position insbesondere dazu ausgelegt ist:
die aktuelle Position von dem ersten Zug (201) zu erhalten.

7. Vorrichtung nach Anspruch 5, **dadurch gekennzeichnet, dass** die Vorrichtung ein streckenseitiges CBTC-Kommunikationsgateway (203) neben einer Fahrtroute des ersten Zuges ist; und
das Bestimmungsmodul (410) beim Bestimmen der aktuellen Position insbesondere dazu ausgelegt ist:
Positionsinformationen von einem CBTC-zugmontierten Kommunikationsgateway (208) in dem ersten Zug (201) zu empfangen, wobei die Positionsinformationen die aktuelle Position angeben, wobei die aktuelle Position von dem CBTC-zugmontierten Kommunikationsgateway (208) von dem ersten Zug (201) erhalten wird.

8. Vorrichtung nach Anspruch 5, **dadurch gekennzeichnet, dass** das Bestimmungsmodul (410) beim Bestimmen des spezifischen Netzwerks insbesondere dazu ausgelegt ist:
basierend auf der aktuellen Position, das spezifische Netzwerk, das der aktuellen Position entspricht, aus vorgespeicherten Korrespondenzinformationen aufzufinden, wobei die Korrespondenzinformationen dazu ausgelegt sind, eine Korrespondenzbeziehung zwischen einer Position des ersten Zuges (201) und einem Netzwerk, das in dem spezifischen Bereich (110A, 110B) zu verwenden ist, anzugeben.

9. Computerlesbares Medium, das einen Code zum Veranlassen eines Computers, das Verfahren nach einem der Ansprüche 1 bis 4 auszuführen, umfasst.

## Revendications

1. Procédé de gestion des trains basée sur la communication, CBTC, comprenant :
a1) la détermination (310) d'une position actuelle d'un premier train (201) ;
a2) dans lequel le premier train (201) a un itinéraire de circulation et un deuxième train a un itinéraire de circulation ;
a3) la détermination que des positions de trains sur les itinéraires de circulation se trouvent ou non dans une zone spécifique (110A, 110B), dans laquelle la distance entre le premier train et le deuxième train est telle qu'un brouillage est causé lorsque le premier train (201) et le deuxième train utilisent la même technologie de communication sans fil et la même fréquence pour les communications CBTC, et dans laquelle deux types de réseaux, un réseau d'évolution à long terme LTE et un réseau local sans fil, WLAN, sont déployés ;
b) la détermination (320) d'un réseau spécifique à utiliser dans la zone spécifique (110A, 110B), dans lequel ledit réseau spécifique est sélectionné parmi le réseau d'évolution à long terme LTE, et le réseau local sans fil, WLAN, déployés dans ladite zone spécifique (110A, 110B), en fonction d'une distance entre la position actuelle du premier train et le deuxième train ; et
c) dans ladite zone spécifique (11 OA, 110B), le lancement (330) d'une communication sur le réseau sélectionné pour transmettre des informations en vue d'une communication CBTC afin de gérer ledit premier train (201).

2. Procédé selon la revendication 1, **caractérisé en ce que** ladite étape de détermination d'une position actuelle dudit premier train (201) comprend :
l'obtention de ladite position actuelle à partir dudit premier train (201).

3. Procédé selon la revendication 1, **caractérisé en ce que** ladite étape de détermination d'une position actuelle dudit premier train (201) comprend :
la réception d'informations de position à partir d'une passerelle de communication montée sur train CBTC (208) dans ledit premier train (201), lesdites informations de position indiquant ladite position actuelle, ladite position actuelle étant obtenue par ladite passerelle de communication montée sur train CBTC (208) à partir dudit premier train (201).

4. Procédé selon la revendication 1, **caractérisé en ce que** ladite étape de détermination dudit réseau spécifique comprend :
en fonction de ladite position actuelle, la recherche, à partir d'informations de correspondance pré-stockées, dudit réseau spécifique qui correspond à ladite position actuelle, dans lequel lesdites informations de correspondance sont configurées pour indiquer une relation de correspondance entre une position du premier train (201) et un réseau à utiliser dans la zone spécifique (110A, 110B).

5. Dispositif de gestion des trains basée sur la communication, CBTC, comprenant un module de détermination (410) et un module de communication (420),
dans lequel le module de détermination (410) est configuré pour :
a1) déterminer (310) une position actuelle d'un premier train (201) ;
a2) dans lequel le premier train (201) a un itinéraire de circulation et un deuxième train a un itinéraire de circulation ;
a3) déterminer que des positions de trains sur les itinéraires de circulation se trouvent ou non dans une zone spécifique (110A, 110B), dans laquelle la distance entre le premier train et le deuxième train est telle qu'un brouillage est causé lorsque le premier train (201) et le deuxième train utilisent la même technologie de communication sans fil et la même fréquence pour les communications CBTC, et dans laquelle deux types de réseau, un réseau d'évolution à long terme, LTE, et un réseau local sans fil, WLAN, sont déployés ;
b) déterminer un réseau spécifique à utiliser dans la zone spécifique (110A, 110B), dans lequel ledit réseau spécifique est sélectionné parmi le réseau d'évolution à long terme LT, et le réseau local sans fil, WLAN, déployés dans ladite zone spécifique (110A, 110B), en fonction d'une distance entre la position actuelle du premier train et le deuxième train ; et dans lequel ledit module de communication (400) est configuré pour :
c) lancer, dans ladite zone spécifique (110A, 110B), une communication sur le réseau sélectionné pour transmettre des informations en vue d'une communication CBTC afin de gérer ledit premier train (201).

6. Dispositif selon la revendication 5, **caractérisé en ce que** ledit dispositif est une passerelle de communication montée sur train CBTC (208) dans ledit premier train (201) ;
ledit module de détermination (410), lors de la détermination de ladite position actuelle, est configuré spécifiquement pour :
obtenir ladite position actuelle à partir dudit premier train (201).

7. Dispositif selon la revendication 5, **caractérisé en ce que** ledit dispositif est une passerelle de communication de voie CBTC (203) à côté d'un itinéraire de circulation dudit premier train ; et
ledit module de détermination (410), lors de la détermination de ladite position actuelle, est configuré spécifiquement pour :
recevoir des informations de position à partir d'une passerelle de communication montée sur train CBTC (208) dans ledit premier train (201), lesdites informations de position indiquant ladite position actuelle, ladite position actuelle étant obtenue par ladite passerelle de communication montée sur train CBTC (208) dudit premier train (201).

8. Dispositif selon la revendication 5, **caractérisé en ce que** ledit module de détermination (410), lors de la détermination dudit réseau spécifique, est configuré spécifiquement pour :
en fonction de ladite position actuelle, rechercher, à partir d'informations de correspondance préstockées, ledit réseau spécifique qui correspond à ladite position actuelle, dans lequel lesdites informations de correspondance sont configurées pour indiquer une relation de correspondance entre une position du premier train (201) et un réseau à utiliser dans la zone spécifique (110A, 110B).

9. Support lisible par ordinateur, comprenant un code permettant à un ordinateur d'exécuter le procédé selon l'une quelconque des revendications 1 à 4.
